# EUROPEAN PATENT APPLICATION

(11) **EP 4 586 474 A1**
(43) Date of publication of application: **16.07.2025**
(21) Application number: 24205017.7
(22) Date of filing: 07.10.2024
(51) Int. Cl.: H02K 29/03, H02K 1/276, H02K 15/03

(54) **PERMANENT MAGNET SYNCHRONOUS MOTOR AND MANUFACTURING METHOD OF PERMANENT MAGNET SYNCHRONOUS MOTOR**

(30) Priority: 11.01.2024 JP 2024002341
(71) Applicant: Kabushiki Kaisha Toshiba, Tokyo 105-0023 (JP); TOSHIBA INFRASTRUCTURE SYSTEMS & SOLUTIONS CORPORATION, Saiwai-ku Kawasaki-shi Kanagawa 212-0013 (JP)
(72) Inventor: MISU, Daisuke, Kanagawa, 212-0013 (JP); MAKINO, Hiroaki, Kanagawa, 212-0013 (JP); KOTSUGAI, Takuya, Kanagawa, 212-0013 (JP); MATSUSHITA, Makoto, Kanagawa, 212-0013 (JP); TAKEUCHI, Katsutoku, KANAGAWA, 212-0013 (JP)
(74) Representative: AWA Sweden AB

(57) **Abstract**

According to an embodiment, a permanent magnet synchronous motor includes: a permanent magnet rotor (100) including a rotor shaft, a rotor core (130) formed with magnet housing flux barriers (131), and permanent magnets (120); and a stator (200) including a stator core (210) formed with a plurality of stator teeth (211) and a stator winding. The magnet housing flux barrier has a magnet housing part (132) and a flux barrier portion extended part (133) extending to a side of a geometrical center axis MC. A flux barrier portion extended part offset angle Φ has two kinds of values of first and second flux barrier portion extended part offset angles, and the magnet housing flux barriers in each magnetic pole pair have the same flux barrier portion extended part offset angle Φ with each other and take one of the two kinds of values.

## Description

### FIELD

Embodiments disclosed herein relate to a permanent magnet synchronous motor and a manufacturing method of the permanent magnet synchronous motor.

### BACKGROUND

As a permanent magnet synchronous motor, a so-called interior magnet synchronous motor in which a permanent magnet is arranged inside a core is known. This interior magnet synchronous motor is composed of a stator in which a stator coil is arranged on an almost cylindrical stator core having a plurality of stator slots and a rotor which is provided on a radial inside of the stator and provided rotatable with respect to the stator.

The rotor has a rotor shaft provided to be rotatable around a rotation center axis, and a rotor core externally fixed to the rotor shaft. The rotor core is formed with a number of magnet insertion holes according to the number of poles. In the magnet insertion hole, a permanent magnet is inserted. In the permanent magnet synchronous motor with this configuration, when current is supplied to a stator coil, rotational torque is applied to the rotor by the interaction between a magnetic flux generated on a primary side (stator side) and a magnetic flux of the permanent magnet in the rotor.

### PRIOR ART DOCUMENTS

### PATENT DOCUMENTS

Patent Document 1: Japanese Patent Application Laid-open No. 2020-14304
Patent Document 2: Japanese Patent Application Laid-open No. 2004-343886

### SUMMARY OF THE INVENTION

### PROBLEMS TO BE SOLVED BY THE INVENTION

Generally, there are magnetic unevenness between the rotor and the stator due to the existence of the stator slots, and therefore torque unevenness (cogging torque) in which the value of rotational torque increases/decreases occurs in the rotor due to the unevenness, resulting in a factor of mechanical vibration and noise during rotation without load.

As an effective means for reducing the cogging torque, there is a known method of arranging electromagnetic steel sheets shifted at regular intervals in a circumferential direction being the rotation direction when stacking the electromagnetic steel sheets of the stator or the rotor in an axial direction, that is, a method of applying so-called skew. However, in this case, there is a problem causing an increase in man-hours and an increase in number of parts during manufacturing.

Further, there is a means for canceling out cogging torques generated in the magnetic poles by changing the shape of the permanent magnet and its housing hole for each magnetic pole, but there is a problem of not being able to cope with a case where a magnetic circuit is changed such as a difference depending on the number of poles or the number of slots per pole per phase.

A problem to be solved by the present invention is to provide a permanent magnet synchronous motor and a manufacturing method of the permanent magnet synchronous motor capable of reducing cogging torque without using skew.

### MEANS FOR SOLVING THE PROBLEM

To achieve the above object, a permanent magnet synchronous motor according to an embodiment of the present invention includes: a permanent magnet rotor including a rotor shaft extending in an axial direction and rotating around a rotation center axis, a rotor core mounted on a radially outer side of the rotor shaft and having magnet housing flux barriers circumferentially line-symmetrical with respect to a geometrical center axis being a center in a circumferential direction of a magnetic pole, the magnet housing flux barriers being formed at a position corresponding to each of a plurality of magnetic poles, and permanent magnets housed in the respective magnet housing flux barriers; and a stator including a stator core formed to surround the rotor core on a circumferential outer side of the rotor core via a gap, and a stator winding having a portion housed in each of a plurality of stator slots each formed between a plurality of stator teeth formed in the stator core, wherein: the magnet housing flux barrier has a magnet housing part housing the permanent magnet and a flux barrier portion extended part extending from a radially outer portion of the magnet housing part to a side of the geometrical center axis; in a cross-section perpendicular to the rotation center axis, a flux barrier portion extended part offset angle being a circumferential angle in an electrical angle formed between the geometrical center axis and a straight line linking the rotation center axis and a tip on a side of the geometrical center axis of the flux barrier portion extended part has two kinds of values of a first flux barrier portion extended part offset angle smaller than a circumferential center angle and a second flux barrier portion extended part offset angle smaller than the circumferential center angle across a target stator tooth having the circumferential center angle, the circumferential center angle being larger than a minimum offset angle; and two magnetic poles adjacent to each other of the plurality of magnetic poles form one magnetic pole pair, and the magnet housing flux barriers in each magnetic pole pair have the same flux barrier portion extended part offset angle with each other and take one of the two kinds of values.

### BRIEF DESCRIPTION OF THE DRAWINGS

FIG. 1 is a transverse sectional view illustrating a permanent magnet synchronous motor according to a first example of an embodiment.
FIG. 2 is a transverse sectional view illustrating a permanent magnet synchronous motor according to a second example of the embodiment.
FIG. 3 is a partial cross-sectional view illustrating a magnet housing flux barrier of a permanent magnet rotor of the permanent magnet synchronous motor according to the embodiment.
FIG. 4 is a flowchart illustrating the procedure of a manufacturing method of the permanent magnet synchronous motor in the embodiment.
FIG. 5 is a flowchart illustrating the detailed procedure of a design step of a rotor core in the manufacturing method of the permanent magnet synchronous motor according to the embodiment.
FIG. 6 is a flowchart illustrating the detailed procedure of a setting step of an FB portion extended part offset angle minimum condition at the design step of the rotor core in the manufacturing method of the permanent magnet synchronous motor according to the embodiment.
FIG. 7 is a conceptual graph showing an example of rotation angle dependency characteristics of cogging torque obtained in the manufacturing method of the permanent magnet synchronous motor according to the embodiment.
FIG. 8 is a conceptual graph showing an example of rotation angle dependency characteristics of primary torque and secondary torque of the cogging torque obtained in the manufacturing method of the permanent magnet synchronous motor according to the embodiment.
FIG. 9 is an explanatory chart illustrating a relationship between stator teeth and a conceptual graph indicating an example of dependency characteristics of a primary torque maximum amplitude value and a secondary torque maximum amplitude value on a flux barrier portion extended part offset angle obtained in the manufacturing method of the permanent magnet synchronous motor according to the embodiment.
FIG. 10 is a conceptual explanatory chart for explaining the derivation of a first flux barrier portion extended part offset angle and a second flux barrier portion extended part offset angle in the manufacturing method of the permanent magnet synchronous motor according to the embodiment.
FIG. 11 is a partial transverse sectional view illustrating a case of 6 poles and 54 slots of the permanent magnet synchronous motor according to the embodiment.
FIG. 12 is an explanatory chart illustrating the relationship between the stator teeth and a conceptual graph showing an example of dependency characteristics of the primary torque maximum amplitude value and the secondary torque maximum amplitude value on the flux barrier portion extended part offset angle in the case of 6 poles and 54 slots obtained in the manufacturing method of the permanent magnet synchronous motor according to the embodiment.
FIG. 13 is a partial transverse sectional view illustrating a case of 6 poles and 72 slots of the permanent magnet synchronous motor according to the embodiment.
FIG. 14 is an explanatory chart illustrating the relationship between the stator teeth and a conceptual graph showing an example of dependency characteristics of the primary torque maximum amplitude value and the secondary torque maximum amplitude value on the flux barrier portion extended part offset angle in the case of 6 poles and 72 slots obtained in the manufacturing method of the permanent magnet synchronous motor according to the embodiment.
FIG. 15 is a graph showing the influence of the dependency characteristics of a cogging torque maximum amplitude value on the offset angle when a stator tooth angle width is changed.

### DETAILED DESCRIPTION

Hereinafter, a permanent magnet synchronous motor and a manufacturing method of a permanent magnet synchronous motor according to embodiments of the present invention will be explained with reference to the drawings. Herein, the same or similar parts are denoted by the same reference numerals, and redundant explanations are omitted.

### [Embodiments]

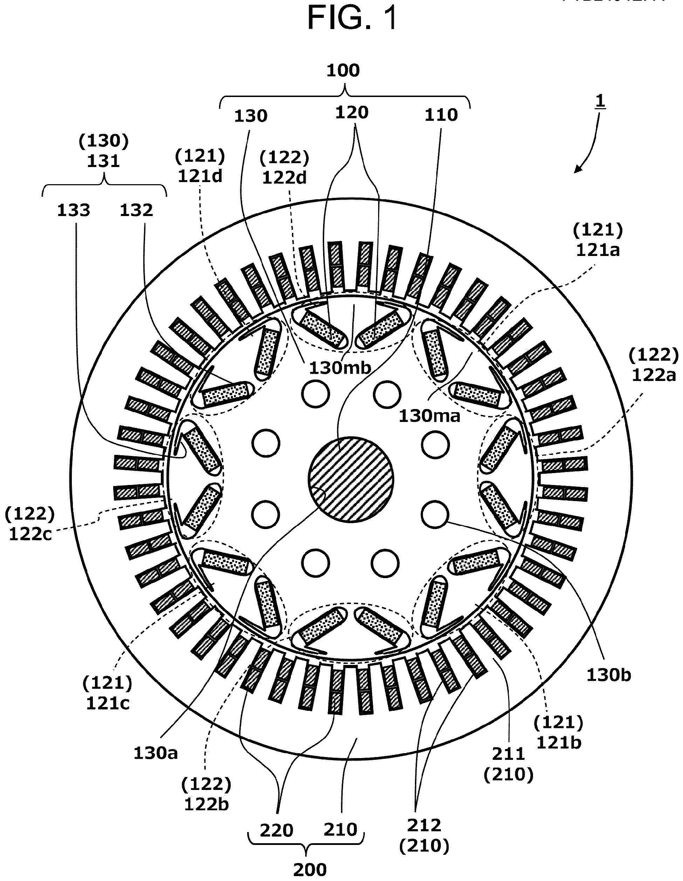

FIG. 1 is a transverse sectional view illustrating a permanent magnet synchronous motor 1 according to a first example of an embodiment. The permanent magnet synchronous motor 1 has a permanent magnet rotor 100 and a stator 200.

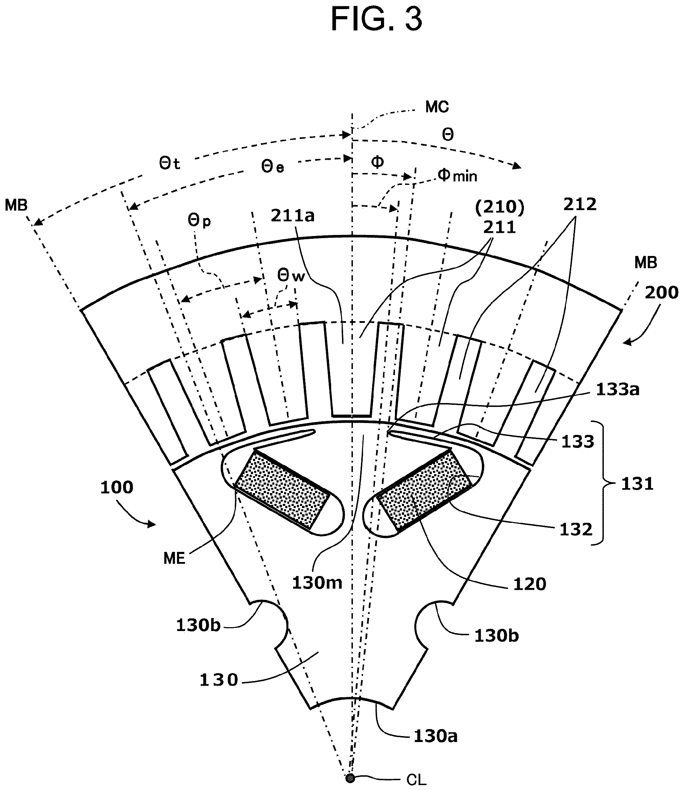

The permanent magnet rotor 100 has a rotor shaft 110 extending in an axial direction and rotating around a rotation center axis CL (FIG. 3), a rotor core 130 mounted on a radially outer side of the rotor shaft 110, and a plurality of permanent magnets 120 housed in the rotor core 130.

Note that a direction parallel to a direction in which the rotation center axis CL extends is called the axial direction, a direction from the rotation center axis CL toward the outside (away direction) is called a radial direction, and a direction in which the permanent magnet rotor 100 rotates is called a circumferential direction. Further, as for the radial direction, a side far from the rotation center axis CL is called a radially outer side and a side close to the rotation center axis CL is called a radially inner side.

The rotor core 130 has a plurality of first magnetic poles 121 and a plurality of second magnetic poles 122. In a cross-section perpendicular to the rotation center axis CL, in each of the first magnetic poles 121 and the second magnetic poles 122, two permanent magnets 120 are arranged which are located at line-symmetric positions in the circumferential direction across a geometrical center axis MC (FIG. 3). Each two permanent magnets 120 are arranged so that the interval between them in the circumferential direction becomes larger toward the radially outer side. This arrangement may be called a V-shape arrangement. Hereinafter, a case of referring to the geometrical center axis MC means a case in a cross-section perpendicular to the rotation center axis CL, and a note to that effect will be omitted.

The first magnetic poles 121 include a magnetic pole 121a, a magnetic pole 121b, a magnetic pole 121c, and a magnetic pole 121d, and the second magnetic poles 122 include a magnetic pole 122a, a magnetic pole 122b, a magnetic pole 122c, and a magnetic pole 122d.

For example, if the magnetic flux in the magnetic pole 121a is directed from the permanent magnet to the radially outer side, the radial direction of the magnetic flux in the magnetic pole 122a is opposite. Such a combination of the magnetic pole 121a and the magnetic pole 122a is called a magnetic pole pair. In this case, the magnetic flux directs from the magnetic pole 121a to the radially outer side and then directs to the radially inner side, and reaches the magnetic pole 122a. Similarly, the magnetic pole 121b and the magnetic pole 122b form a magnetic pole pair, the magnetic pole 121c and the magnetic pole 122c form a magnetic pole pair, and the magnetic pole 121d and the magnetic pole 122d form a magnetic pole pair. Accordingly, in the case illustrated in FIG. 1, the number of the magnetic pole pairs is four. Note that the number of magnetic pole pairs in the permanent magnet rotor 100 is called a pole pair number below.

The rotor core 130 has, for example, a cylindrical structure in which a plurality of electromagnetic steel sheets are stacked. The rotor core 130 has a shaft through hole 130a formed at the center so that the rotor shaft 110 passes therethrough, eight rod through holes 130b formed spaced apart from each other in the circumferential direction at intermediate positions in the radial direction, and two magnet housing flux barriers 131 formed circumferentially line-symmetrical with respect to the geometrical center axis MC (FIG. 3) so as to house two permanent magnets 120 respectively for each magnetic pole.

The magnet housing flux barrier 131 has a magnet housing part 132 that is a portion which houses the permanent magnet 120, and a flux barrier portion extended part (FB portion extended part) 133 extending from a radially outer portion of the magnet housing part 132 to the geometrical center axis MC side along the outer periphery of the rotor core 130. The magnet housing parts 132 have the same shape and dimensions with each other in each magnetic pole.

The magnet housing flux barriers 131 in the first magnetic pole 121 have FB portion extended parts 133 having the same extending length. Further, the magnet housing flux barriers 131 in the magnetic pole 122 have the FB portion extended parts 133 having the same extending length. The FB portion extended part 133 in the magnetic pole 121 and the FB portion extended part 133 in the magnetic pole 122 have extending lengths different from each other. In other words, in the permanent magnet synchronous motor 1 according to the first example illustrated in FIG. 1, the FB portion extended parts 133 having two kinds of extending lengths are present. Details about the extending lengths different from each other will be explained later.

The stator 200 has a stator core 210 and a stator winding 220. At an outer peripheral portion of the stator core 210, a plurality of stator teeth 211 provided at an interval from each other are formed. The stator teeth 211 adjacent to each other form a stator slot 212. A part of the stator winding 220 is housed in each stator slot 212.

Central magnetic paths 130ma and 130mb will be explained later with reference to FIG. 3.

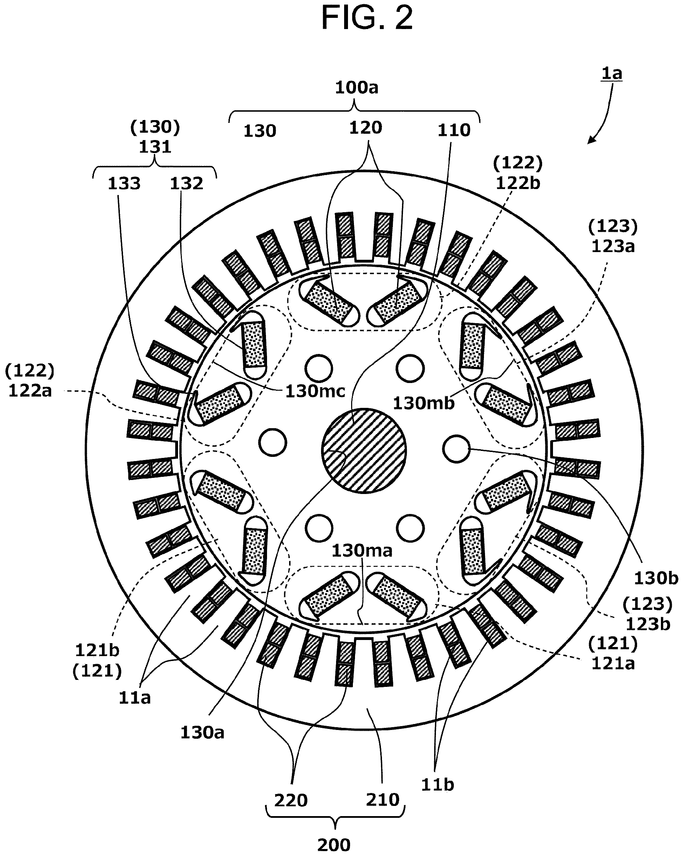

FIG. 2 is a transverse sectional view illustrating a permanent magnet synchronous motor 1a according to a second example of the embodiment. The permanent magnet synchronous motor 1a has a permanent magnet rotor 100a and a stator 200.

The permanent magnet rotor 100a has a rotor shaft 110 extending in an axial direction and rotating around a rotation center axis CL (FIG. 3), a rotor core 130 mounted on a radially outer side of the rotor shaft 110, and a plurality of permanent magnets 120 housed in the rotor core 130.

Two permanent magnets 120 are arranged in each magnetic pole 121a, 121b, 122a, 122b, 123a, 123b. Each two permanent magnets 120 are arranged so that they are line-symmetrically with respect to the geometrical center axis MC in the circumferential direction and the interval between them becomes larger toward the radially outer side. As a result of this, central magnetic paths 130ma, 130mb, and 130mc are formed.

In the second example in FIG. 2, the magnetic pole 122a and the magnetic pole 122b form a magnetic pole pair, and the magnetic pole 123a and the magnetic pole 123b form a magnetic pole pair. In other words, the number of the magnetic pole pairs is four being an even number in the permanent magnet rotor 100 according to the first example illustrated in FIG. 1, whereas the number of the magnetic pole pairs is three being an odd number in the permanent magnet rotor 100a according to the second example illustrated in FIG. 2.

FIG. 3 is a partial cross-sectional view illustrating the magnet housing flux barrier 131 of the permanent magnet rotor 100 of the permanent magnet synchronous motor 1 according to the embodiment. FIG. 3 illustrates a configuration of one magnetic pole. A boundary between the magnetic pole and a magnetic pole adjacent thereto is indicated by a geometrical boundary axis MB. The geometrical boundary axis MB is located at a circumferential angular position at a half circumferential angle of a circumferential angle formed between two geometrical center axes MC adjacent to each other. A circumferential range of the magnetic pole is a region sandwiched between two geometrical boundary axes MB.

As illustrated in FIG. 3, in a transverse section perpendicular to the rotation center CL, the two permanent magnets 120 are arranged line-symmetrically with respect to the geometrical center axis MC as explained above. The permanent magnets 120 are housed in the magnet housing flux barriers 131 formed line-symmetrically with respect to the geometrical center axis MC. Each of the magnet housing flux barriers 131 has a magnet housing part 132 in which the permanent magnet 120 is housed, and an FB portion extended part 133 extending from a radially outer portion of the magnet housing part 132 to the geometrical center axis MC side.

Here, relative positions in the circumferential direction (rotation direction) of the permanent magnet rotor 100 and the stator 200 are assumed to be in a state where the geometrical center axis MC coincides with a center plane in the circumferential direction of one arbitrary stator tooth 211 as illustrated in FIG. 3. Hereinafter, this stator tooth 211 is called a reference stator tooth 211a. Further, the circumferential angle in a clockwise direction from the geometrical center axis MC is assumed to be Θ. Note that when angles including the circumferential angle and a rotation angle are referred to, all the angles mean electrical angles unless otherwise stated.

Here, some angles in the circumferential direction are defined for the convenience of explanation. An angle between center planes in the circumferential direction of the stator teeth 211 adjacent to each other in the circumferential direction, namely, a circumferential angle in an electrical angle between center lines of the stator teeth 211 adjacent to each other in the circumferential direction is called a stator-stator teeth pitch angle Θp. A circumferential angle in an electrical angle formed between the geometrical center axis MC and the geometrical boundary axis MB of the magnetic pole is called a magnetic pole region angle Θt. Further, a center angle between the geometrical center axis MC and a straight line linking a portion ME of the permanent magnet 120 farthest from the geometrical center axis MC and the rotation center CL is called a magnetic pole opening angle Oe. Accordingly, the magnetic pole opening angle Oe is smaller than the magnetic pole region angle Θt. Further, an angle of the width of the stator tooth 211 is called a stator tooth angle width Ow.

For example, the case illustrated in FIG. 3 has 6 poles and 36 slots and therefore the geometric circumferential angle of one pole is 60 degrees, whereas the electrical circumferential angle is 180 degrees, and therefore the electrical magnetic pole region angle Θt is 90 degrees, that is, a half of that.

In the transverse sectional view illustrated in FIG. 3, an angle in an electrical angle formed between the geometrical center axis MC and a straight line linking a tip 133a of the FB portion extended part 133 and the rotation center CL is called an FB portion extended part offset angle Φ. As the extended length of the FB portion extended part 133 is longer, the tip 133a of the FB portion extended part 133 becomes closer to the geometrical center axis MC and the FB portion extended part offset angle Φ becomes smaller. As explained above, the FB portion extended part offset angle Φ can be said to be an index in place of the extended length of the FB portion extended part 133. Note that a circumferential angle in an electrical angle formed between two straight lines linking the tips 133a of the magnet housing flux barriers 131 adjacent to each other and the rotation center CL in one magnetic pole becomes twice the FB portion extended part offset angle Φ.

Here, a region between the tips 133a facing each other across the geometrical center axis MC becomes a path of the magnetic flux by the permanent magnets 120, and this portion is called a central magnetic path 130m. The central magnetic paths 130m and 130mb illustrated in FIG. 1 indicate the central magnetic paths 130m in a case of a large width and a case of a small width. The central magnetic paths 130ma, 130mb, and 130mc illustrated in FIG. 2 indicate the central magnetic paths 130m in a case of a large width, a case of a small width, and a case of a width being an intermediate of them.

The FB portion extended part offset angle Φ has a value of a predetermined minimum offset angle Φmin or more. The predetermined minimum offset angle Φmin will be explained later.

As explained above, the FB portion extended parts 133 of the magnet housing flux barriers 131 in the magnetic pole 121 have the same extended length and the FB portion extended parts 133 of the magnet housing flux barriers 131 in the magnetic pole 122 have the same extended length, and the extended length is different between the magnetic pole 121 and the magnetic pole 122. Accordingly, the FB portion extended part offset angles Φ in the magnetic pole 121 have the same value and the FB portion extended part offset angles Φ in the magnetic pole 122 have the same value, and the value is different between the magnetic pole 121 and the magnetic pole 122 In the case illustrated in FIG. 1, the FB portion extended part offset angle Φ in the magnetic pole 121 is smaller than the FB portion extended part offset angle Φ in the magnetic pole 122.

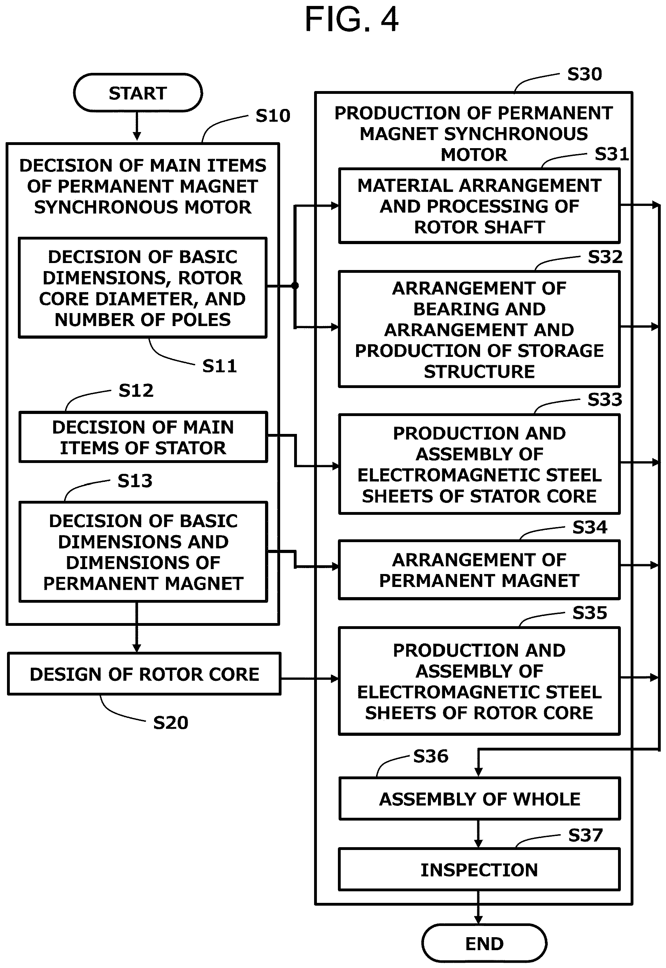

FIG. 4 is a flowchart illustrating the procedure of a manufacturing method of the permanent magnet synchronous motor 1 according to an embodiment. Specifically, the manufacturing method for obtaining the permanent magnet synchronous motor 1 illustrated in FIG. 1 and FIG. 3 will be explained.

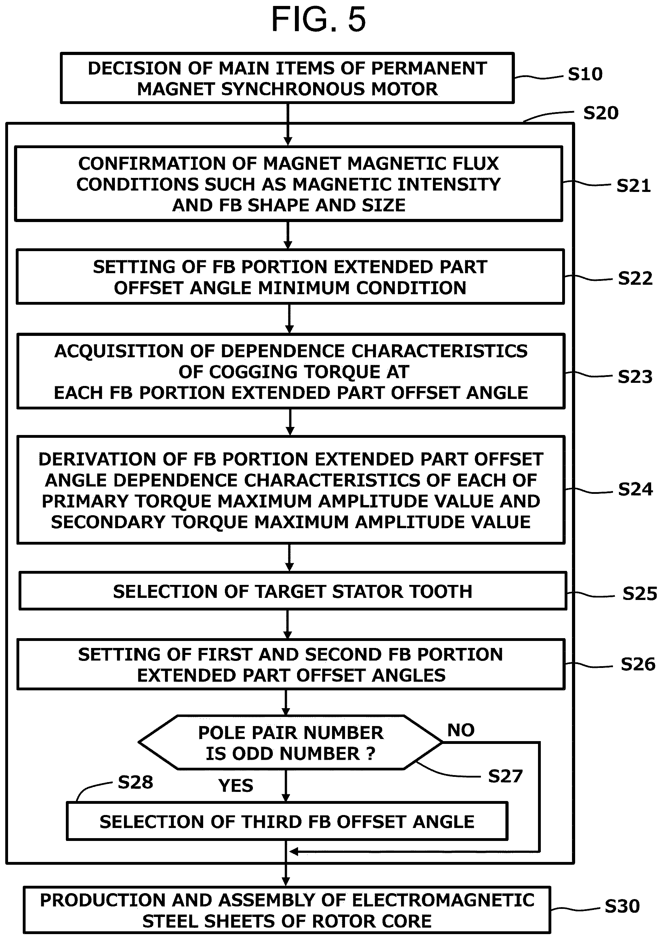

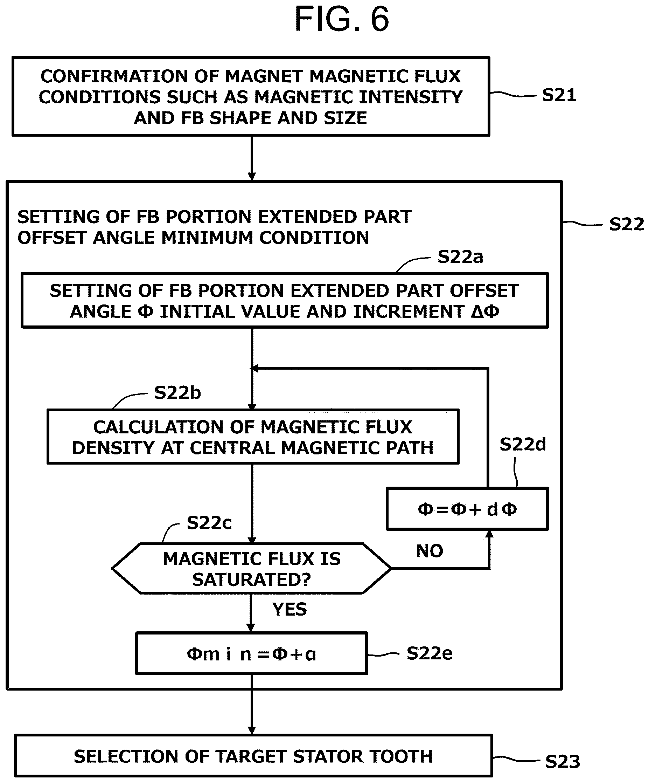

The manufacturing method of the permanent magnet synchronous motor 1 has a decision step S10 of main items of the permanent magnet synchronous motor 1, a design step S20 of the rotor core 130, and a production step S30 of the permanent magnet synchronous motor 1. Details of the design step S20 of the rotor core 130 will be explained later while citing FIG. 5 and FIG. 6.

The decision step S10 of the main items of the permanent magnet synchronous motor 1 has a step S11 of deciding the basic dimensions of the rotor shaft 110, the diameter of the rotor core 130, and the number of poles p, a step S12 of deciding the main items of the stator 200 such as the dimensions of the stator core 210, and the dimensions and the number of the stator teeth 211, and a step S13 of deciding the basic dimensions of the rotor core 130 and the dimensions of the permanent magnet 120.

The production step S30 of the permanent magnet synchronous motor 1 has steps for production based on the results at the stages of the step S10 and the step S20, specifically, as follows.

Based on the results of the decision step S11 about the rotor shaft basic dimensions, the rotor core diameter, and the number of poles, material arrangement and processing of the rotor shaft 110 are performed (Step S31). Further, the arrangement of the bearing and the arrangement and production of a storage structure of the stator 200 such as a casing and a bearing bracket are performed (Step S32).

Next, based on the results of the setting step S12 about the main items of the stator 200, the production and assembly of the electromagnetic steel sheets of the stator core 210 are performed (Step S33).

Next, based on the results of the step S13 of deciding the basic dimensions of the rotor core 130 and the dimensions of the permanent magnet 120, the arrangement of the permanent magnet 120 is performed (Step S34).

Next, based on the results of the design step S20 about the rotor core 130, the production and assembly of the electromagnetic steel sheets of the rotor core 130 are performed (Step S35).

Next, the permanent magnet rotor 100 is assembled by assembling the rotor shaft 110, the rotor core 130, and the permanent magnet 120, and the assembly of the whole permanent magnet synchronous motor 1 such as the attachment of the stator 200 to the storage structure, the assembly of the storage structure, the attachment of the bearing, and the insertion and support of the permanent magnet rotor 100 is performed (Step S36). Next, an inspection is performed on the assembled permanent magnet synchronous motor 1 to make it into a product (Step S37).

FIG. 5 is a flowchart illustrating the detailed procedure of the design step of the rotor core 130 in the manufacturing method of the permanent magnet synchronous motor 1 according to the embodiment. Hereinafter, the detailed procedure of the design step S20 of the rotor core 130 will be explained.

As the design step S20 of the rotor core 130, first, magnet magnetic flux conditions such as the magnetic intensity of the magnet and the shape and size of the magnet housing flux barrier 131 are confirmed (Step S21). Specifically, the magnet magnetic flux conditions including the magnetic intensity of the magnet and the shape and size of the magnet housing flux barrier 131 which are conditions for evaluating and calculating the magnetic flux (magnet magnetic flux) by the permanent magnet 120 are clarified and confirmed.

Next, the minimum condition of the FB portion extended part offset angle Φ is set (Step S22). Specifically, the minimum offset angle Φmin is set. Details will be explained later with reference to FIG. 6.

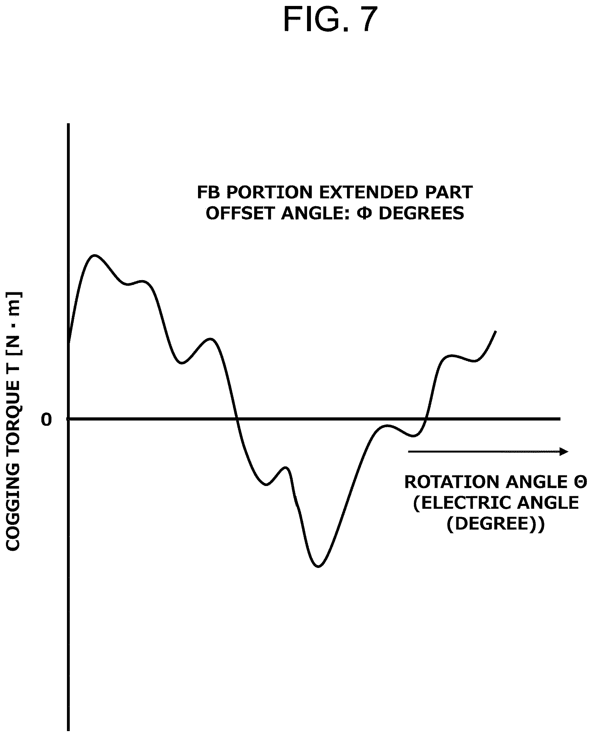

Next, rotation angle dependency characteristics of cogging torque at each FB portion extended part offset angle are acquired (Step S23). Details will be explained later while citing FIG. 7.

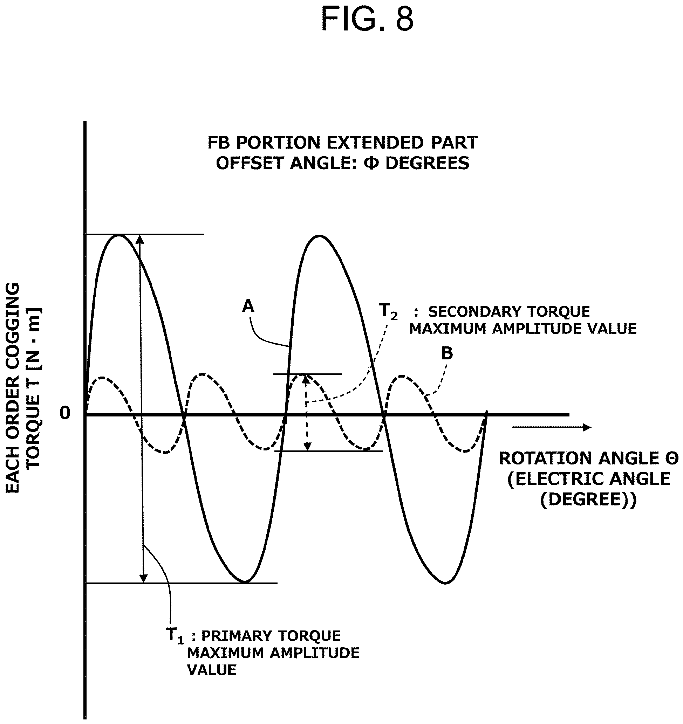

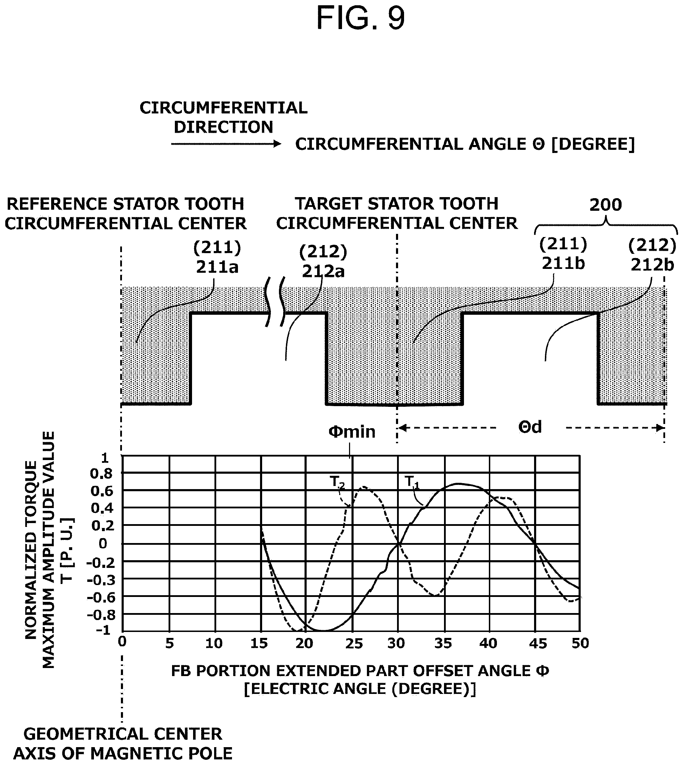

Next, FB portion extended part offset angle dependency characteristics of each of a primary torque maximum amplitude value and a secondary torque maximum amplitude value are derived (Step S24). Details will be explained later while citing FIG. 8 and FIG. 9.

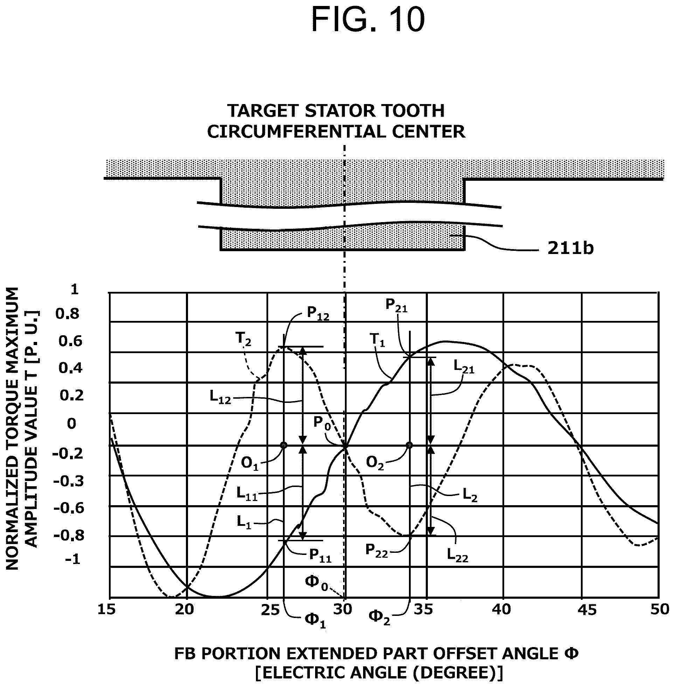

Next, the selection of the target stator tooth (Step S25) and the setting of two FB portion extended part offset angles (Step S26) are performed. Their details will be explained later while citing FIG. 9 and FIG. 10 respectively, and two kinds of FB portion extended part offset angles such as a first FB portion extended part offset angle Φ₁ and a second FB portion extended part offset angle Φ₂ are obtained. Specifically, the magnet housing flux barriers 131 having two kinds of extended lengths of the FB portion extended parts 133 are obtained.

Next, whether the pole pair number is an odd number or not is determined (Step S27). If the pole pair number is not determined to be an odd number at the step S27 (NO at Step S27), the step S20 is ended. As a result of this, in the case where the pole pair number is an even number as in the permanent magnet synchronous motor 1 according to the first example as illustrated in FIG. 1, the magnet housing flux barriers 131 having two kinds of FB portion extended part offset angles, namely, two kinds of extended lengths of the FB portion extended parts 133 are obtained.

The two kinds of magnet housing flux barriers 131 are allocated to respective magnetic pole pairs. Specifically, the allocation is performed so that the FB portion extended part 133 of the magnet housing flux barrier 131 corresponding to the first magnetic pole 121 of the permanent magnet rotor 100 illustrated in FIG. 1 has the first FB portion extended part offset angle Φ₁ and the FB portion extended part 133 of the magnet housing flux barrier 131 corresponding to the second magnetic pole 122 has the second FB portion extended part offset angle Φ₂. This can make a primary mode component and a secondary mode component of the cogging torque cancel each other out to reduce the cogging torque.

If the pole pair number is determined to be an odd number at the step S27 (YES at Step S27), the selection of a third FB offset angle is performed next (Step S28). As a result of this, though details will be explained later, in the case where the pole pair number is an odd number as in the permanent magnet synchronous motor 1a according to the second example as illustrated in FIG. 2, the magnet housing flux barriers 131 having three kinds of FB portion extended part offset angles, namely, three kinds of extended lengths of the FB portion extended parts 133 are obtained.

These three kinds of magnet housing flux barriers 131 are allocated to respective magnetic pole pairs. Specifically, the allocation is performed so that the FB portion extended part 133 of the magnet housing flux barrier 131 corresponding to the first magnetic pole 121 of the permanent magnet rotor 100a illustrated in FIG. 2 has the first FB portion extended part offset angle Φ₁, the FB portion extended part 133 of the magnet housing flux barrier 131 corresponding to the second magnetic pole 122 has the second FB portion extended part offset angle Φ₂, and the FB portion extended part 133 of the magnet housing flux barrier 131 corresponding to the third magnetic pole 123 has a third FB portion extended part offset angle Φ₃. This can make a primary mode component and a secondary mode component of the cogging torque cancel each other out to reduce the cogging torque.

FIG. 6 is a flowchart illustrating the detailed procedure of the setting step S22 of the FB portion extended part offset angle minimum condition at the design step of the rotor core 130 in the manufacturing method of the permanent magnet synchronous motor 1 according to the embodiment. The detailed procedure at the step S22 is as follows.

First, an initial value and an increment dΦ of the FB portion extended part offset angle Φ are set (Step S22a). Here, the initial value of the FB portion extended part offset angle Φ is set to a sufficiently small value at which saturation does not occur.

Next, a magnet magnetic flux is calculated to obtain a magnetic flux density at the central magnetic path 130m (FIG. 3) (Step S22b).

Next, whether the magnetic flux is saturated or not is determined from the magnetic flux density at the central magnetic path 130m obtained at the step S22b (Step S22c). If it is determined that the magnetic flux is not saturated at the step 22c (NO at Step S22c), a value obtained by adding the increment dΦ to the FB portion extended part offset angle Φ is set as a new FB portion extended part offset angle Φ (Step S22d), and the step S22b and the step S22c are repeated.

If it is determined that the magnetic flux is saturated at the step 22c (YES at Step S22c), a minimum offset angle Φmin is calculated (Step S22e). Specifically, a value obtained by adding a margin α to the FB portion extended part offset angle Φ at that time point is set as the minimum offset angle Φmin.

Note that at the step S22c, whether the saturation of the magnetic flux occurs or not is determined based on the calculated magnetic flux at the central magnetic path, but the determination is not limited to this. For example, a margin of x% is given to the saturation condition, and whether (100 - x)% is reached may be determined.

By the procedure at the setting step S22 of the FB portion extended part offset angle minimum condition, the minimum offset angle Φmin is obtained. The minimum offset angle Φmin falls within, for example, a range of 20 degrees to 30 degrees, and a case where the minimum offset angle Φmin is 25 degrees will be explained as an example in the following explanation.

Hereinafter, details of the step S23 and the step S24 will be explained while citing FIG. 7 to FIG. 9.

FIG. 7 is a conceptual graph showing an example of the rotation angle dependency characteristics of cogging torque T obtained in the manufacturing method of the permanent magnet synchronous motor according to the embodiment. The horizontal axis is a rotation angle Θ (electrical angle (degree)) and the vertical axis is cogging torque [N · m].

The rotation angle dependency characteristics of cogging torque T obtained at the step S23 are change characteristics of the value of the cogging torque T with respect to the angle in the circumferential direction, namely, the circumferential angle (rotation angle) Θ from a stationary state when the permanent magnet rotor 100 is rotated or tuned in the rotation direction in a no-load state, namely, a state where no current is passed through the stator winding 220. Here, the rotation angle dependency characteristics of the cogging torque T in FIG. 7 are assumed to be those in a case where the FB portion extended part offset angle is Φ degrees. Specifically, the rotation angle dependency characteristics of the cogging torque T for each FB portion extended part offset angle are obtained using the FB portion extended part offset angle Φ as a parameter.

When the permanent magnet rotor 100 makes one revolution, namely, geometrically rotates 360 degrees, a measured value of the cogging torque T changes with a certain angular cycle decided by the pole pair number and the number of stator teeth 211. FIG. 7 illustrates the change in a case where the rotation angle Θ is one cycle.

As illustrated in FIG. 7, it can be understood that the aspect of the change in the cogging torque T with respect to the one cycle of the rotation angle Θ includes a fundamental wave and a higher-order wave.

FIG. 8 is a conceptual graph showing an example of the rotation angle dependency characteristics of primary torque and secondary torque of the cogging torque obtained in the manufacturing method of the permanent magnet synchronous motor according to the embodiment. The horizontal axis is a rotation angle Θ (electrical angle (degree)) and the vertical axis is each order cogging torque [N· m].

To acquire the primary torque maximum amplitude value and the secondary torque maximum amplitude value at the step S24, Fourier transform is first performed on the change in the cogging torque T illustrated in FIG. 7 to acquire primary torque (torque in a basic mode) and torque in higher modes equal to or higher than secondary torque. FIG. 8 illustrates changes in the primary torque and the secondary torque for one cycle of the rotation angle Θ in a case where the FB portion extended part offset angle is Φ degrees. Specifically, a solid line A and a solid line B indicate the primary torque characteristics and the secondary torque characteristics as the changes in the primary torque and the secondary torque with respect to the change in the rotation angle Θ, respectively.

In FIG. 8, the value of the absolute value when the absolute value becomes maximum in the change in the primary torque in one cycle is assumed to be a primary torque maximum amplitude value T₁. Besides, the value of the absolute value when the absolute value becomes maximum in the change in the secondary torque in one cycle is assumed to be a secondary torque maximum amplitude value T₂. These are values when the FB portion extended part offset angle is Φ degrees. Accordingly, they are expressed as functions of the primary torque maximum amplitude value T₁ (Φ) and the secondary torque maximum amplitude value T₂ (Φ) and Φ as values depending on Φ, respectively.

FIG. 9 is a conceptual graph showing an example of dependency characteristics of the primary torque maximum amplitude value T₁ and the secondary torque maximum amplitude value T₂ on the flux barrier portion extended part offset angle Φ ("dependency characteristics of the cogging torque maximum amplitude value on the offset angle") obtained in the manufacturing method of the permanent magnet synchronous motor according to the embodiment, and an explanatory chart illustrating the relationship between the characteristic graph and the stator teeth 211. A portion of the stator 200 in FIG. 9 is displayed with the circumferential direction of the cross-section perpendicular to the rotation center axis direction linearly displayed. The horizontal axis is the FB portion extended part offset angle Φ [electrical angle (degree)] and the vertical axis is a normalized torque maximum amplitude value T [P. U.].

FIG. 9 illustrates a state where the center in the circumferential direction of one stator tooth 211 (reference stator tooth 211a) expressed as a reference stator slot and a d-axis being the geometrical center axis of the permanent magnet rotor 100 are at the same position in the circumferential direction. In this case, the scale of the circumferential angle Θ [degree] in the circumferential direction from the circumferential center of the reference stator tooth 211a as the origin of the horizontal axis in FIG. 9 and the scale of the FB portion extended part offset angle Φ [degree] of the graph on the lower side are made equal. As explained above, both the angles indicate electrical angles.

In the graph on the lower side in FIG. 9, a solid line indicates the primary torque maximum amplitude value T₁ (Φ) and a broken line indicates the secondary torque maximum amplitude value T₂ (Φ). The vertical axis of the graph indicates respective ratios of values of the primary torque maximum amplitude value T₁ (Φ) and the secondary torque maximum amplitude value T₂ (Φ) with respect to maximum values |Φmax| in the absolute values of the primary torque maximum amplitude value T₁ (Φ) and the secondary torque maximum amplitude value T₂ (Φ), namely, normalized maximum amplitude values T (Φ).

In FIG. 9, a stator tooth 211 expressed as a target stator tooth 211b is located on the right side of the reference stator tooth 211a. Here, the circumferential angle in the electrical angle formed between the circumferential center of the reference stator tooth 211a and the circumferential center of the target stator tooth 211b is larger than the minimum offset angle Φmin. Here, Φmin is set to 25 degrees as explained above.

In the case where the circumferential angle in the electrical angle formed between the circumferential center of the reference stator tooth 211a and the circumferential center of the adjacent stator slot 212 becomes the minimum offset angle Φmin or more, the adjacent stator slot 212 becomes the target stator tooth 211b. In the case where the circumferential angle in the electrical angle formed between the circumferential center of the reference stator tooth 211a and the circumferential center of the adjacent stator slot 212 is smaller than the minimum offset angle Φmin, a stator slot 212 away from the reference stator tooth 211a by the minimum offset angle Φmin or more is assumed to be the target stator tooth 211b. As a result of this, the circumferential angle Φ in the electrical angle formed between the circumferential center of the reference stator tooth 211a and the circumferential center of the target stator tooth 211b is the minimum offset angle Φmin or more in any case.

The example illustrated in FIG. 9 indicates a case where the circumferential angle Θ at the circumferential center of the target stator tooth 211b is 30 degrees. In other words, this stator tooth 211 is the first stator tooth 211 where the circumferential angle Θ at the circumferential center becomes larger than 25 degrees.

As illustrated in FIG. 9, in the primary torque maximum amplitude value T₁ (Φ) and the secondary torque maximum amplitude value T₂ (Φ), the normalized torque maximum amplitude values T are zero at an FB portion extended part offset angle Φ of about 30 degrees. In other words, the primary torque maximum amplitude value T₁ and the secondary torque maximum amplitude value T₂ cross (zero-cross) a line (horizontal axis) where the values on the vertical axis (normalized torque maximum amplitude values T) become zero at the FB portion extended part offset angle Φ of about 30 degrees.

FIG. 10 is a conceptual explanatory chart for explaining the derivation of the first flux barrier portion extended part offset angle Φ₁ and the second flux barrier portion extended part offset angle Φ₂ in the manufacturing method of the permanent magnet synchronous motor according to the embodiment. The horizontal axis is the FB portion extended part offset angle Φ [electrical angle (degree)] and the vertical axis is the normalized torque maximum amplitude value T [P. U.].

As explained above, zero-cross points of the primary torque maximum amplitude value T₁ and the secondary torque maximum amplitude value T₂ are located at the angular positions of about 30 degrees, respectively. Here, a value on the horizontal axis (FB portion extended part offset angle) of an intersecting point P₀ of the primary torque maximum amplitude value T₁ and the secondary torque maximum amplitude value T₂ is displayed as a central flux barrier portion extended part offset angle Φ₀.

The flux barrier portion extended part offset angle Φ is shifted to a side smaller than the central flux barrier portion extended part offset angle Φ₀. More specifically, in FIG. 10, a straight line L₁ parallel to the vertical axis is shifted to the side smaller than the central flux barrier portion extended part offset angle Φ₀. Here, a point where the straight line L₁ intersects with a curve T₁ indicating the primary torque maximum amplitude value T₁ is assumed to be Pn, a point where the straight line L₁ intersects with a curve T₂ indicating the secondary torque maximum amplitude value T₂ is assumed to be P₁₂, and a point where the straight line L₁ parallel to the vertical axis intersects with the horizontal line being zero is assumed to be O₁. When a length between the point O₁ and the point P₁₁ is assumed to be a length L₁₁ and a length between the point O₁ and the point P₂ is assumed to be a length L₁₂, L₁₁ is an absolute value of the primary torque maximum amplitude value T₁ taking a negative value and L₁₂ is an absolute value of the secondary torque maximum amplitude value T₂ taking a positive value.

Focusing a total value of the primary torque maximum amplitude value T₁ and the secondary torque maximum amplitude value T₂, its absolute value is a difference between the absolute value of the primary torque maximum amplitude value T₁ and the absolute value of the secondary torque maximum amplitude value T₂. As the difference is smaller, the primary torque maximum amplitude value T₁ and the secondary torque maximum amplitude value T₂ cancel each other out more, and the magnitude of the cogging torque T becomes smaller. From this viewpoint, the first flux barrier portion extended part offset angle Φ₁ is set.

Similarly, the flux barrier portion extended part offset angle Φ is shifted to a side larger than the central flux barrier portion extended part offset angle Φ₀. More specifically, in FIG. 10, a straight line L₂ parallel to the vertical axis is shifted to the side larger than the central flux barrier portion extended part offset angle Φ₀. Here, a point where the straight line L₂ intersects with the curve T₁ indicating the primary torque maximum amplitude value T₁ is assumed to be P₂₁, a point where the straight line L₂ intersects with the curve T₂ indicating the secondary torque maximum amplitude value T₂ is assumed to be P₂₂, and a point where the straight line L₂ parallel to the vertical axis intersects with the horizontal line being zero is assumed to be O₂. When a length between the point O₂ and the point P₂₁ is assumed to be a length L₂₁ and a length between the point O₂ and the point P₂₂ is assumed to be a length L₂₂, L₂₁ is an absolute value of the primary torque maximum amplitude value T₁ taking a positive value and L₂₂ is an absolute value of the secondary torque maximum amplitude value T₂ taking a negative value. From the viewpoint where a difference between the absolute value of the primary torque maximum amplitude value T₁ and the absolute value of the secondary torque maximum amplitude value T₂ becomes smaller, the second flux barrier portion extended part offset angle Φ₂ is set. Here, the flux barrier portion extended part offset angle Φ is an angle in the electrical angle formed between and the geometrical center axis MC and a straight line linking the tip 133a of the FB portion extended part 133 and the rotation center CL on the transverse section indicated in FIG. 3 as explained above.

Next, the case of the flux barrier portion extended part offset angle Φ exemplified in FIG. 1 will be explained. The permanent magnet rotor 100 of the permanent magnet synchronous motor 1 has two kinds of magnetic poles such as the first magnetic pole 121 and the second magnetic pole 122 as explained above. The central magnetic path 130ma of the first magnetic pole 121 corresponds to a circumferential angle of a value twice the first flux barrier portion extended part offset angle Φ₁. Further, the central magnetic path 130mb of the second magnetic pole 122 corresponds to a circumferential angle of a value twice the second flux barrier portion extended part offset angle Φ₂.

Next, the case of the flux barrier portion extended part offset angle Φ exemplified in FIG. 2 will be explained. The permanent magnet rotor 100 of the permanent magnet synchronous motor 1a has three kinds of magnetic poles such as the first magnetic pole 121, the second magnetic pole 122, and the third magnetic pole 123 as explained above. The central magnetic path 130ma of the first magnetic pole 121 corresponds to a circumferential angle of a value twice the first flux barrier portion extended part offset angle Φ₁. Further, the central magnetic path 130mb of the second magnetic pole 122 corresponds to a circumferential angle of a value twice the second flux barrier portion extended part offset angle Φ₂. Furthermore, the central magnetic path 130mc of the third magnetic pole 123 corresponds to a circumferential angle of a value twice the central flux barrier portion extended part offset angle Φ₀.

Next, it will be explained that the relationship between the central flux barrier portion extended part offset angle Φ₀ and the minimum offset angle Φmin is satisfied even in the case where the permanent magnet synchronous motor 1 has 6 poles and 54 slots and even in the case where the permanent magnet synchronous motor 1 has 6 poles and 72 slots.

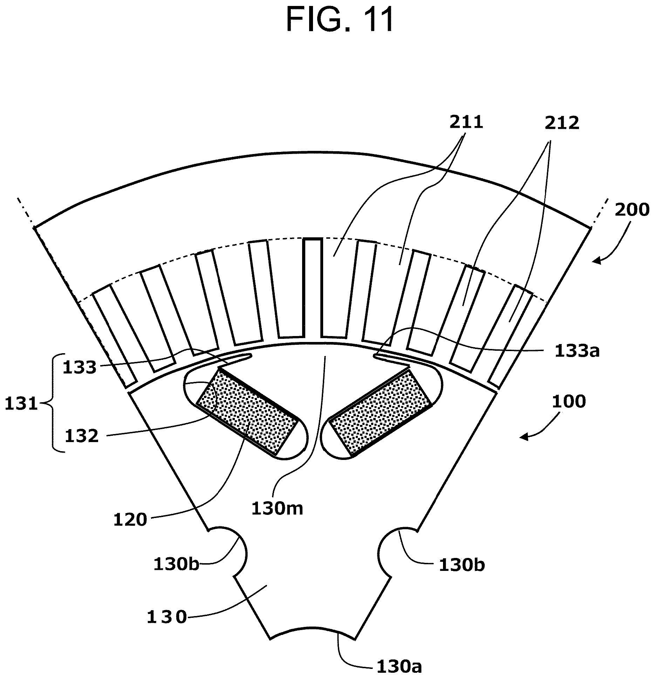

FIG. 11 is a partial transverse sectional view illustrating the case of 6 poles and 54 slots of the permanent magnet synchronous motor according to the embodiment. FIG. 11 illustrates one magnetic pole of 6 magnetic poles, therefore, a region having a geometrical circumferential angle of 60 degrees. In FIG. 11, nine stator teeth 211 and nine stator slots 212 are practically illustrated. Therefore, the number of the stator teeth 211 is 54 in the whole stator 200.

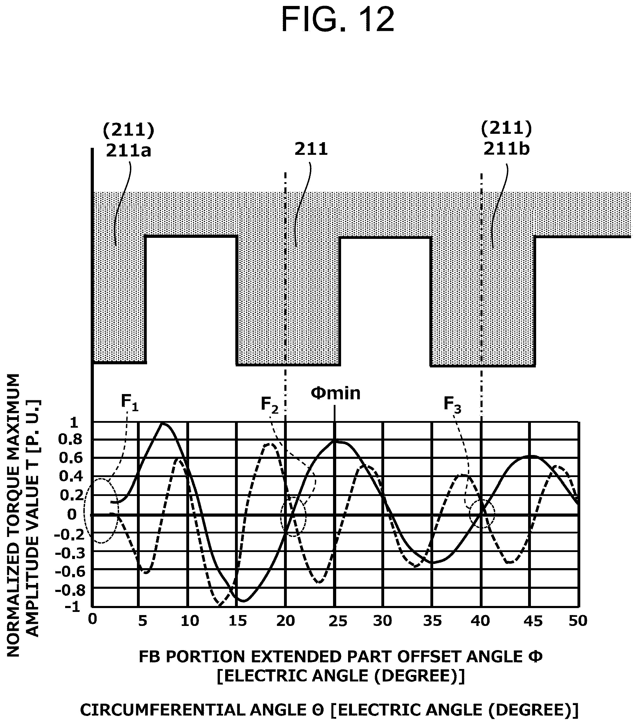

FIG. 12 is an explanatory chart illustrating the relationship between the stator teeth 211 and a conceptual graph showing an example of dependency characteristics of the primary torque maximum amplitude value T₁ and the secondary torque maximum amplitude value T₂ on the flux barrier portion extended part offset angle Φ ("dependency characteristics of the cogging torque maximum amplitude value on the offset angle") in the case of 6 poles and 54 slots obtained in the manufacturing method of the permanent magnet synchronous motor 1 according to the embodiment. In the graph, a solid line indicates the primary torque maximum amplitude value T₁ and a broken line indicates the secondary torque maximum amplitude value T₂. Further, FIG. 12 illustrates a case of a minimum offset angle Φmin of 25 degrees as an example. The horizontal axis is the FB portion extended part offset angle Φ [electrical angle (degree)] and the vertical axis is the normalized torque maximum amplitude value T [P. U.].

Values on the horizontal axis using the reference stator tooth 211a as a reference are indicated as the FB portion extended part offset angle Φ and the circumferential angle Θ. The circumferential angle Θ at a center position in the circumferential direction of the stator slot 212 is 20 degrees in the case of a stator tooth 211 adjacent to the reference stator tooth 211a and is 40 degrees in the case of a third stator tooth 211 viewed from the reference stator tooth 211a.

Here, attention is focused on the zero cross statuses of the primary torque maximum amplitude values T₁ and the secondary torque maximum amplitude values T₂ in the vicinity of the FB portion extended part offset angles Φ corresponding to 0 degrees, 20 degrees, and 40 degrees which are the circumferential angles Θ at the centers in the circumferential direction of the respective stator teeth 211.

In a vicinity F₁ where the FB portion extended part offset angle Φ is 0 degrees, the angle of zero cross is unclear. In a vicinity F₂ where the FB portion extended part offset angle Φ is 20 degrees, the angle of zero cross is present near about 21 degrees above 20 degrees and there is a deviation between the zero cross angle and 20 degrees. In a vicinity F₃ where the FB portion extended part offset angle Φ is 40 degrees, the zero cross angle is about 40 degrees with a small deviation, in other words, they almost coincide. Here, the small deviation or almost coincidence means a case where the difference from the FB portion extended part offset angle Φ is relatively small, for example, a case of smaller than 1 degree.

More specifically, in the case of the third stator tooth 211 viewed from the reference stator tooth 211a, the FB portion extended part offset angle Φ exceeds the minimum offset angle Φmin (25 degrees in FIG. 12), and the zero cross angle almost coincides with the FB portion extended part offset angle Φ. The stator tooth 211 corresponding to the FB portion extended part offset angle Φ can be selected as the target stator tooth 211b.

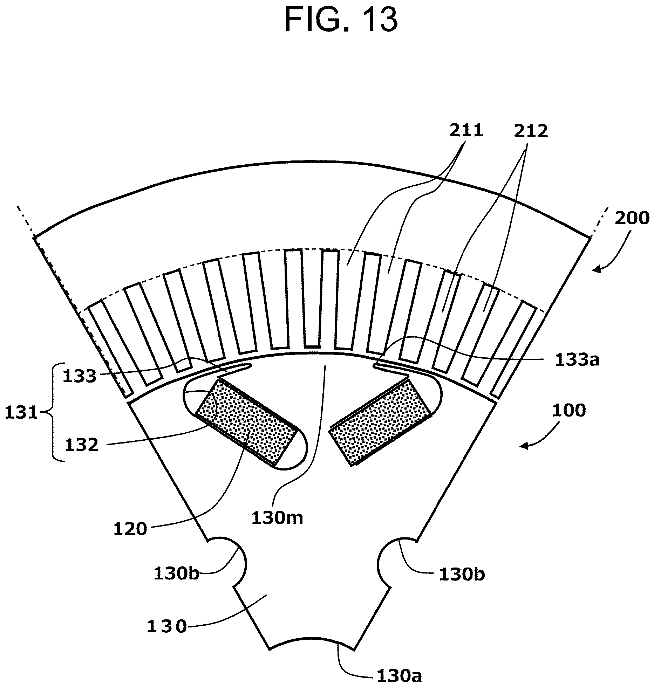

FIG. 13 is a partial transverse sectional view illustrating the case of 6 poles and 72 slots of the permanent magnet synchronous motor according to the embodiment. FIG. 13 illustrates one magnetic pole of 6 magnetic poles, therefore, a region having a geometrical circumferential angle of 60 degrees. In FIG. 13, 12 stator teeth 211 and 12 stator slots 212 are practically illustrated. Therefore, the number of the stator teeth 211 is 72 in the whole stator 200.

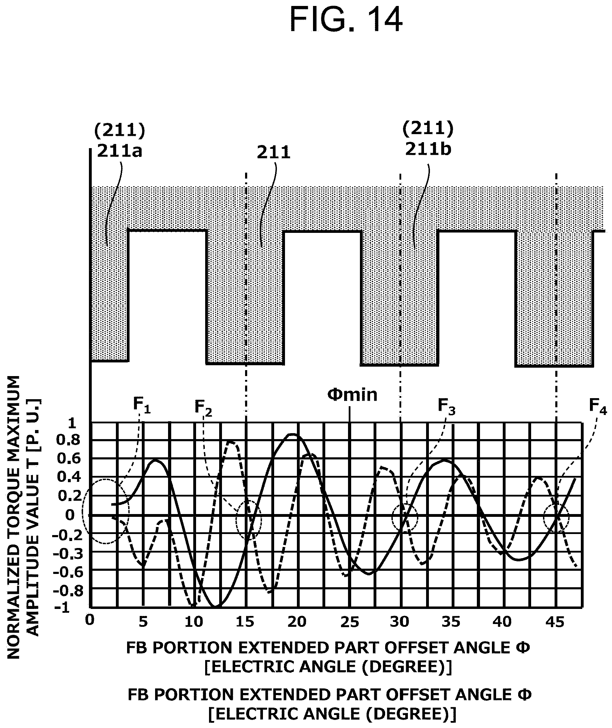

FIG. 14 is an explanatory chart illustrating the relationship between the stator teeth and a conceptual graph showing an example of dependency characteristics of the primary torque maximum amplitude value and the secondary torque maximum amplitude value on the flux barrier portion extended part offset angle in the case of 6 poles and 72 slots obtained in the manufacturing method of the permanent magnet synchronous motor according to the embodiment. In the graph, a solid line indicates the primary torque maximum amplitude value T₁ and a broken line indicates the secondary torque maximum amplitude value T₂. Further, FIG. 14 also illustrates a case of a minimum offset angle Φmin of 25 degrees as an example. The horizontal axis is the FB portion extended part offset angle Φ [electrical angle (degree)] and the vertical axis is the normalized torque maximum amplitude value T [P. U.].

Also in FIG, 14, values on the horizontal axis using the reference stator tooth 211a as a reference are indicated as the FB portion extended part offset angle Φ and the circumferential angle Θ. The circumferential angle Θ at a center position in the circumferential direction of the stator slot 212 is 15 degrees in the case of a stator tooth 211 adjacent to the reference stator tooth 211a, is 30 degrees in the case of a second stator tooth 211 viewed from the reference stator tooth 211a, and is 45 degrees in the case of a third stator tooth 211 viewed from the reference stator tooth 211a.

Here, attention is focused on the zero cross statuses of the primary torque maximum amplitude values T₁ and the secondary torque maximum amplitude values T₂ in the vicinity of the FB portion extended part offset angles Φ corresponding to 0 degrees, 15 degrees, 30 degrees, and 45 degrees which are the circumferential angles Θ at the centers in the circumferential direction of the respective stator teeth 211.

In a vicinity F₁ where the FB portion extended part offset angle Φ is 0 degrees, the angle of zero cross is unclear. In a vicinity F₂ where the FB portion extended part offset angle Φ is 20 degrees, the angle of zero cross is present near about 16 degrees above 15 degrees and there is a deviation between the zero cross angle and 15 degrees. In a vicinity F₃ where the FB portion extended part offset angle Φ is 30 degrees, the zero cross angle is near about 30 degrees with a small deviation. In a vicinity F₄ where the FB portion extended part offset angle Φ is 45 degrees, the zero cross angle is near about 45 degrees with a smaller deviation.

More specifically, in the case of the third stator tooth 211 and the fourth stator tooth 211 viewed from the reference stator tooth 211a, the FB portion extended part offset angles Φ exceed the minimum offset angle Φmin (25 degrees in FIG. 14), and the zero cross angles almost coincide with the FB portion extended part offset angles Φ. The stator tooth 211 corresponding to the FB portion extended part offset angle Φ can be selected as the target stator tooth 211b.

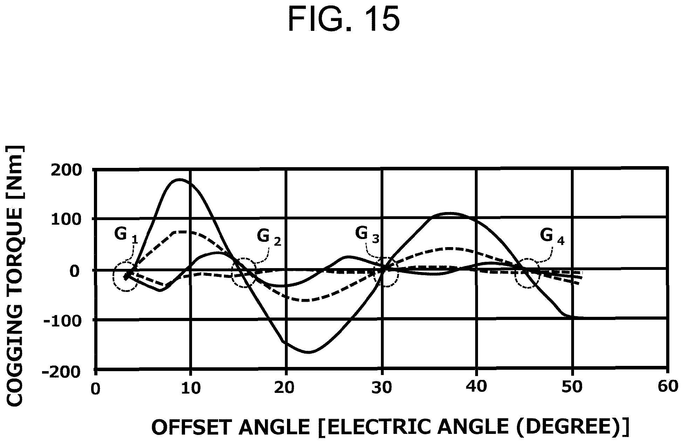

FIG. 15 is a graph showing the influence of the dependency characteristics of the cogging torque maximum amplitude value on the offset angle when the stator tooth angle width Ow (FIG. 3) is changed. The horizontal axis is the offset angle Φ [electrical angle (degree)] and the vertical axis is the cogging torque [N · m].

As illustrated in FIG. 15, it is understood that as the stator tooth angle width Ow of the stator tooth 211 increases, the value of the cogging torque maximum amplitude value increases, but the zero cross angles in regions indicated at G₁ to G₄ are not influenced by the stator tooth angle width Ow.

As explained above, the cogging torque can be reduced by deriving a plurality of kinds of magnet housing flux barriers 131 and allocating them to the magnetic pole pairs.

According to the explained embodiments, it is possible to provide a permanent magnet synchronous motor and a manufacturing method of the permanent magnet synchronous motor capable of reducing cogging torque without using skew.

### [Other embodiments]

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### EXPLANATION OF REFERENCE SIGNS

1, 1a...permanent magnet synchronous motor, 100, 100a...permanent magnet rotor, 110...rotor shaft, 120...permanent magnet, 121, 121a, 121b, 121c...first magnetic pole, 122, 122a, 122b., 122c...second magnetic pole, 123, 123a, 123b...third magnetic pole, 130...rotor core, 130a...shaft through hole, 130b...rod through hole, 130m, 130ma, 130mb, 130mc...central magnetic path, 131...magnet housing flux barrier, 132...magnet housing part, 133...flux barrier portion extended part (FB portion extended part), 133a...tip, 200...stator, 210...stator core, 211...stator tooth, 211a...reference stator tooth, 211b...target stator tooth, 212...stator slot, 220...stator winding

## Claims

1. A permanent magnet synchronous motor comprising:
a permanent magnet rotor comprising a rotor shaft extending in an axial direction and rotating around a rotation center axis, a rotor core mounted on a radially outer side of the rotor shaft and having magnet housing flux barriers arranged on both sides of a geometrical center axis being a center in a circumferential direction of a magnetic pole, the magnet housing flux barriers being formed at a position corresponding to each of a plurality of magnetic poles, and permanent magnets housed in the respective magnet housing flux barriers and arranged line-symmetrically with respect to the geometrical center axis; and
a stator comprising a stator core formed to surround the rotor core on a circumferential outer side of the rotor core via a gap, and a stator winding having a portion housed in each of a plurality of stator slots each formed between a plurality of stator teeth formed in the stator core, wherein:
the magnet housing flux barrier has a magnet housing part housing the permanent magnet and a flux barrier portion extended part extending from a radially outer portion of the magnet housing part to a side of the geometrical center axis;
in a cross-section perpendicular to the rotation center axis, a flux barrier portion extended part offset angle being a circumferential angle in an electrical angle formed between the geometrical center axis and a straight line linking the rotation center axis and a tip on a side of the geometrical center axis of the flux barrier portion extended part has two kinds of values of a first flux barrier portion extended part offset angle smaller than a circumferential center angle and a second flux barrier portion extended part offset angle smaller than the circumferential center angle across a target stator tooth having the circumferential center angle, the circumferential center angle being larger than a minimum offset angle; and
two magnetic poles adjacent to each other of the plurality of magnetic poles form one magnetic pole pair, and the magnet housing flux barriers in each magnetic pole pair have the same flux barrier portion extended part offset angle with each other and take one of the two kinds of values.

2. The permanent magnet synchronous motor according to claim 1, wherein
in a case where the number of the magnetic pole pairs is an odd number, the magnet housing flux barriers in each of the magnetic pole pairs take a value of one of the first flux barrier portion extended part offset angle, the second flux barrier portion extended part offset angle, and the flux barrier portion extended part offset angle equal to the circumferential center angle of the target stator tooth.

3. The permanent magnet synchronous motor according to claim 1, wherein
each of the first flux barrier portion extended part offset angle and the second flux barrier portion extended part offset angle is equal to or more than a predetermined first angle and equal to or less than a predetermined second angle from an angular position of the target stator tooth.

4. A manufacturing method of a permanent magnet synchronous motor,
the permanent magnet synchronous motor comprising:
a permanent magnet rotor comprising a rotor shaft extending in an axial direction and rotating around a rotation center axis, a rotor core mounted on a radially outer side of the rotor shaft and having magnet housing flux barriers arranged on both sides of a geometrical center axis being a center in a circumferential direction of a magnetic pole and each having a magnet housing part and a flux barrier portion extended part extending from a radially outer portion of the magnet housing part to a side of the geometrical center axis, the magnet housing flux barriers being formed at a position corresponding to each of a plurality of magnetic poles, and permanent magnets housed in the magnet housing parts and arranged line-symmetrically with respect to the geometrical center axis; and
a stator comprising a stator core formed to surround the rotor core on a circumferential outer side of the rotor core via a gap, and a stator winding having a portion housed in each of a plurality of stator slots each formed between a plurality of stator teeth formed in the stator core,
the manufacturing method comprising the steps of:
deciding a minimum offset angle that is a minimum value of a flux barrier portion extended part offset angle being a circumferential angle in an electrical angle based on a magnetic intensity of the permanent magnet;
acquiring cogging torque angle dependency characteristics on a rotation angle in an electrical angle of cogging torque in a case of the flux barrier portion extended part offset angle using the flux barrier portion extended part offset angle as a parameter;
calculating a primary mode and a secondary mode of the cogging torque angle dependency characteristics to acquire a primary torque maximum amplitude value and a secondary torque maximum amplitude value being respective maximum amplitude values;
deriving, based on the primary torque maximum amplitude value and the secondary torque maximum amplitude value, offset angle dependency characteristics being dependency characteristics on the flux barrier portion extended part offset angle based on the primary torque maximum amplitude value and the secondary torque maximum amplitude value;
selecting a target stator tooth based on the offset angle dependency characteristics; and
deriving, based on the offset angle dependency characteristics and the selected target stator tooth, a first flux barrier portion extended part offset angle and a second flux barrier portion extended part offset angle to make a result of the primary torque maximum amplitude value and the secondary torque maximum amplitude value canceling each other out minimum, wherein
the first flux barrier portion extended part offset angle and the second flux barrier portion extended part offset angle are larger than the minimum offset angle.

5. The manufacturing method of a permanent magnet synchronous motor according to claim 4, further comprising
determining whether the number of magnetic pole pairs of the permanent magnet rotor is an odd number or not, wherein
if the number is determined to be an odd number, the first flux barrier portion extended part offset angle and the second flux barrier portion extended part offset angle are larger than the minimum offset angle.
